# EUROPÄISCHE PATENTANMELDUNG

(11) **EP 4 789 756 A1**
(43) Veröffentlichungstag der Anmeldung: **12.08.2026**
(21) Anmeldenummer: 26157408.1
(22) Anmeldetag: 10.02.2026
(51) Int. Cl.: B01D 71/02, B01D 53/22, C01B 3/503, B01D 69/12

(54) **VERFAHREN ZUR BEARBEITUNG EINER SEMIPERMEABLEN MEMBRAN GEEIGNET ZUR GEWINNUNG VON HOCHREINEM WASSERSTOFF UND MODIFIZIERTE MEMBRAN**

(30) Priorität: 10.02.2025 DE 102025104744
(71) Anmelder: Mahnken, Claus-Lüder, 27367 Ahausen (DE); Lorenzen, Johannes Hinrich, 24966 Sörup OT Winderatt (DE)
(72) Erfinder: Mahnken, Claus-Lüder, 27367 Ahausen (DE)
(74) Vertreter: Kröncke, Rolf

(57) **Zusammenfassung**

Die vorliegende Erfindung betrifft ein Verfahren zur Bearbeitung einer semipermeablen Membran aus einem für Wasserstoff durchlässigen Metall oder einer für Wasserstoff durchlässigen Metalllegierung, geeignet zur Gewinnung von hochreinem Wasserstoff. Weiterhin betrifft die Erfindung eine semipermeable Membran erhältlich gemäß einem erfindungsgemäßen Verfahren. Außerdem betrifft die Erfindung die Verwendung der erfindungsgemäßen semipermeablen Membran zur Gewinnung von hochreinem Wasserstoff, sowie ein Verfahren zur Gewinnung von hochreinem Wasserstoff unter Verwendung der erfindungsgemäßen semipermeablen Membran. Ferner betrifft die Erfindung eine Vorrichtung zur Gewinnung von hochreinem Wasserstoff umfassend die erfindungsgemäße semipermeable Membran.

## Beschreibung

Die vorliegende Erfindung betrifft ein Verfahren zur Bearbeitung einer semipermeablen Membran aus einem für Wasserstoff durchlässigen Eisen oder einer für Wasserstoff durchlässigen eisenhaltigen Metalllegierung, geeignet zur Gewinnung von hochreinem Wasserstoff. Weiterhin betrifft die Erfindung eine semipermeable Membran erhältlich gemäß einem erfindungsgemäßen Verfahren. Außerdem betrifft die Erfindung die Verwendung der erfindungsgemäßen semipermeablen Membran sowie Verfahren zur Gewinnung von hochreinem Wasserstoff unter Verwendung der erfindungsgemäßen semipermeablen Membran. Ferner betrifft die Erfindung eine Vorrichtung zur Gewinnung von hochreinem Wasserstoff umfassend die erfindungsgemäße semipermeable Membran.

### Stand der Technik

Wasserstoff findet als Industriegas vielfältige Anwendungsmöglichkeiten in der Chemie- und Metall-Industrie. Auch die Bedeutung von Wasserstoff als Zwischenspeicher von überschüssiger elektrischer Energie aus erneuerbaren Energiequellen gewinnt immer mehr an Bedeutung.

Besonders interessant ist dabei hochreiner Wasserstoff, da dieser leicht weiterzuverarbeiten ist und eine hohe Energiedichte aufweist. Gängige Methoden zur Gewinnung von hochreinem Wasserstoff beruhen überwiegend auf Kryotechnik oder der Elektrolyse von Wasser und sind sehr energieaufwendig.

Wasserstoff ist Bestandteil von Pyrolysegasen aus unvollständigen Verbrennungsprozessen. Weitere Bestandteile sind unter anderem Kohlenstoffmonoxid und -dioxid, Wasserdampf und Methan. Dieser Wasserstoff ist von großem wirtschaftlichem Interesse, allerdings fehlen noch geeignete Verfahren, den Wasserstoff effektiv und in großem Maßstab aus Pyrolysegasen zu gewinnen. Dieser Wasserstoff wird derzeit mit dem Pyrolysegas ungenutzt in die Umwelt abgegeben.

Aus dem Stand der Technik sind Verfahren bekannt, um hochreinen Wasserstoff aus Gasgemischen, insbesondere aus Pyrolysegasen, zu gewinnen.

Die WO2011/050789 beschreibt ein Kleinkraftwerk, bei welchem eine Einrichtung zur Abscheidung von hochreinem Wasserstoff aus einem Pyrolysegas ein einen Innenraum umgebendes Gehäuse mit zumindest einer, im Gehäuse angeordneten, einen mit Pyrolysegas zumindest teilweise gefüllten Bereich abtrennenden semipermeablen Trennwand aufweist.

Die DE102012109154 beschreibt ein Verfahren zur Gewinnung von hochreinem Wasserstoff aus einem Rohgas. Das Verfahren macht sich zu Nutze, dass ein semipermeables Material aus Metall mindestens zu Beginn des Verfahrens erwärmt wird, um die Menge an durchtretendem Wasserstoff zu erhöhen. In einer bevorzugten Ausführungsform wird ein elektrischer Strom durch das semipermeable Material zu Beginn des Verfahrens geleitet. In einer weiteren bevorzugten Ausführungsform wird das semipermeable Material auf eine Temperatur von 400°C bis 800°C erwärmt.

Es hat sich gezeigt, dass sich bei einer semipermeablen Membran nach dem Stand der Technik zur Gewinnung von hochreinem Wasserstoff die Durchtrittsrate des Wasserstoffs durch die Membran während der Nutzung verringert und die Membran so insgesamt eine geringe Nutzungsdauer aufweist.

Due US 2014 0 069 277 A beschreibt ein Verfahren zur Herstellung einer Gasabscheidungsmembran umfassend einen porösen Träger und eine gasabscheidene aktive Schicht, die auf dem porösen Träger verteilt ist und funktionalisiertes Graphen umfasst. Dieses Dokument beschreibt, dass durch Risse im Graphen Gas durch den porösen Träger durchgehen kann. Hingegen ist die Graphenschicht undurchlässig für Gase. Aufgabe der vorliegenden Erfindung ist es, eine verbesserte semipermeable Membran zur Gewinnung von hochreinem Wasserstoff aus einem Rohgas bereitzustellen wobei diese semipermeable, für Wasserstoff durchlässige Membran eine verlängerte Lebensdauer aufweist und insbesondere keiner Korrosion oder einer geringeren Korrosion im Vergleich zu herkömmlichen Membranen unterworfen ist, so dass die Durchtrittsrate des Wasserstoffs durch die Membran während der Nutzung nicht, oder zumindest nicht so stark, verringert und sich damit die Nutzungsdauer der Membran insgesamt erhöht.

### Beschreibung der Erfindung

Die Aufgabe wird gelöst durch die Bereitstellung des erfindungsgemäßen Verfahrens zur Bearbeitung einer semipermeablen Membran aus einem für Wasserstoff durchlässigen Eisen oder aus einer für Wasserstoff durchlässigen eisenhaltigen Metalllegierung, geeignet zur Gewinnung von hochreinem Wasserstoff aus einem Rohgas, umfassend die Schritte:
a. Bereitstellen einer semipermeablen Membran aus einem für Wasserstoff durchlässigen Eisen oder aus einer für Wasserstoff durchlässigen eisenhaltigen Metalllegierung;
b. Ausbilden einer für Wasserstoff durchlässigen Schicht die Graphen umfasst, insbesondere daraus besteht, auf mindestens einer Oberfläche der semipermeablen Membran.

Unter "semipermeabler Membran" im Sinne dieser Erfindung, ist eine Membran zu verstehen, die für spezifische Stoffe durchlässig permeabel ist und für andere spezifische Stoffe undurchlässig ist. Man kann auch sagen, dass die Membran selektiv für einen ersten Stoff durchlässig ist und selektiv für einen zweiten Stoff nicht durchlässig ist. Der Stoff kann ein Gas sein und das Stoffgemisch kann ein Gasgemisch sein. Eine semipermeable Membran kann somit für einen ersten gasförmigen Stoff durchlässig sein und für einen zweiten gasförmigen Stoff undurchlässig sein. Eine semipermeable Membran kann auch nur für einen einzelnen ersten gasförmigen Stoff aus einem Gasgemisch durchlässig sein und für alle anderen gasförmigen Stoffe aus einem Gasgemisch nicht durchlässig sein.

Semipermeable Membranen aus für Wasserstoff durchlässigem Eisen oder aus einer für Wasserstoff durchlässigen eisenhaltigen Metalllegierung sind dem Fachmann bekannt. Geeignete eisenhaltige Metalllegierungen enthalten im wesentlichen Eisen und weitere Metalle in geringen Mengen von bis zu 5 Masseprozent.

Unter "hochreiner Wasserstoff" im Sinne dieser Erfindung, ist Wasserstoff mit einem hohen Reinheitsgrad zu verstehen. Dem Fachmann sind diverse Methoden bekannt die Reinheit eines Gases, wie von Wasserstoff, zu beschreiben. Hochreiner Wasserstoff im Sinne dieser Erfindung weist einen Reinheitsgrad von mindestens 99,99% auf. Hochreiner Wasserstoff kann einen geringen Rest eines anderen Stoffes enthalten. Bei dem anderen Stoff kann es sich um ein Gas, eine Flüssigkeit oder um einen Feststoff handeln. Oft umfasst der Rest jedoch mindestens ein Gas. Der Rest kann auch aus einer Vielzahl von Stoffen bestehen. Es ist jedoch klar, dass die absolute Menge der Stoffe des Restes im Vergleich zu der Menge des Wasserstoffes gering ist. Auch Wasserstoff, der einen Reinheitsgrad von 100% hat, fällt ist hochreiner Wasserstoff. Wasserstoff mit einem Reinheitsgrad von 100% weist keinen Rest eines anderen Stoffes auf.

Unter dem Begriff "Rohgas" im Sinne diese Erfindung ist ein Gasgemisch aus Wasserstoff und mindestens einem zweiten Gas zu verstehen. Das Gasgemisch kann auch eine Vielzahl weiterer Gase neben dem Wasserstoff enthalten. Es ist auch möglich, dass das Gasgemisch ein Aerosol enthält. Mögliche Aerosolpartikel können dabei Wasserdampf, Ruß oder Flugasche sein. In einer Ausführungsform ist das Rohgas ein Pyrolysegas aus einem unvollständigen Verbrennungsprozess. Ein derartiges Pyrolysegas kann zum Beispiel bei der unterstöchiometrischen Verbrennung von organischem Material, wie Holzpellets, entstehen. Die wesentlichen Bestandteile eines solchen Pyrolysegases sind Wasserdampf, Wasserstoff, Kohlenstoffmonoxid und -dioxid, sowie Methan. Darüber hinaus kann das Pyrolysegas andere Bestandteile, wie teerartige, ölige und/oder fettige Stoffe enthalten.

In einer Ausführungsform ist das Rohgas ein reformiertes Synthesegas. Ein reformiertes Synthesegas kann durch mindestens eine Reformierungsreaktion, wie mindestens eine Dampfreformierungsreaktion, aus einem Gasgemisch, wie einem Pyrolysegas, hergestellt werden. Bestandteile eines reformierten Synthesegases können Methan, Wasserstoff, Kohlenstoffdioxid, Kohlenstoffmonooxid und Wasserdampf sein. Durch die Reformierungsreaktion können Bestandteile des Gasgemisches die kein Kohlenstoffdioxid, Methan, Kohlenstoffmonooxid, Wasserstoff oder Wasserdampf sind, in mindestens einen dieser Stoffe umgewandelt werden. Dem Fachmann sind Methoden zur Reformierung von Gasgemischen bekannt.

In einer Ausführungsform ist das Rohgas ein Gasgemisch aus natürlichem Erdgas und Wasserstoff im Gasnetz der Energieversorgung. Dem Fachmann ist die Zusammensetzung von Erdgas bekannt. Ein Gasgemisch aus Erdgas und Wasserstoff entsteht zum Beispiel, wenn dem Erdgas des Gasnetzes der Energieversorgung Wasserstoff beigemischt wird. Der Wasserstoff kann dabei sogenannter "grüner" Wasserstoff sein, der als Energiespeicher von durch regenerative Energiequellen erzeugter Energie dient. Der Wasserstoff kann so mit dem Erdgas im Gasnetz der Energieversorgung transportiert werden.

Graphen ist eine Strukturform des Kohlenstoffs. Die Kohlenstoffatome liegen dabei kovalent gebunden in sp²-Hybridisierung vor und bilden eine zweidimensionale Schicht. Dabei ist jedes Kohlenstoffatom mit einer Doppelbindung an ein weiteres Kohlenstoffatom und mit zwei Einfachbindungen an jeweils ein weiteres Kohlenstoffatom gebunden. Die Kohlenstoffatome bilden eine hexagonale, einlagige Kristallstruktur. Diese Lagen von Graphen können sich mittels Van-der-Waals-Kräften zusammen lagern. Eine Vielzahl übereinander liegender Lagen Graphen kann bei entsprechender Kristallisierung Graphit ausbilden. Vorliegend wird aber Graphen als Oberflächenbeschichtung vorgesehen. Die hohe mechanische und chemische Stabilität von Graphen ist dem Fachmann bekannt. Es ist bekannt, dass Graphen gegenüber mechanischen Einwirkungen sehr stabil ist und gegenüber chemischen Substanzen eine sehr geringe Reaktivität zeigt. Dem Fachmann sind verschiedenen Methoden bekannt Graphen herzustellen.

Es hat sich gezeigt, dass die Oberfläche einer semipermeablen Membran nach dem Stand der Technik aus einem für Wasserstoff durchlässigen Eisen oder eisenhaltigen Metalllegierung, insbesondere aus Reineisen, bei der Gewinnung von hochreinem Wasserstoff aus einem Rohgas während der Nutzung korrodiert. Es wurde dabei erkannt, dass die Bestandteile des Rohgases für die Korrosion der Oberfläche der Membran verantwortlich sind. So ist es möglich, dass Wasserdampf aus dem Rohgas auf der Oberfläche der Membran kondensiert und sich so eine wässrige Schicht auf der Oberfläche der Membran bildet. Darin können andere Bestandteile des Rohgases in Lösung gehen und sich ätzende Stoffe, insbesondere Säuren, bilden. Die korrosive Wirkung von Säuren auf Eisen und eisenhaltigen Metalllegierungen, insbesondere Reineisen, sind bekannt. Es ist auch möglich, dass ein Bestandteil des Rohgases direkt eine korrosive Wirkung auf die Oberfläche der Membran hat.

Es zeigte sich, dass sich aufgrund dieser Korrosion die Durchtrittsrate des Wasserstoffs durch die Membran des Standes der Technik während der Nutzung verringert. Dies könnte daran liegen, dass durch die Korrosion die Oberfläche der Membran weniger durchlässig für Wasserstoff wird und sich so die Durchtrittsrate des Wasserstoffs verringert. Es wurde beobachtet, dass die semipermeable Membran dann nicht mehr für die effiziente Gewinnung von hochreinem Wasserstoff geeignet ist und sich so die Nutzungsdauer der Membran verringert. Eine verkürzte Nutzungsdauer der Membran bedeutet, dass eine alte Membran mit verringerter Durchtrittsrate des Wasserstoffs früh gegen eine neue Membran ausgetauscht werden muss, die eine höhere Durchtrittsrate des Wasserstoffs aufweist.

Die Korrosion tritt dabei insbesondere auf der dem Rohgas zugewandten Oberfläche der Membran auf. Durch entsprechende Komponenten im Rohgas, wie Aerosole, Wasserdampf und andere Bestandteile wird das Eisen oxidiert und korrodiert.

Es wurde erkannt, dass durch das erfindungsgemäße Verfahren eine semipermeable Membran mit Graphen-Oberfläche bereitgestellt wird, auf die Bestandteile des Rohgases keine, beziehungsweise keine so starke, korrosive Wirkung haben wie auf die Oberfläche von Membranen nach dem Stand der Technik. Zum einen ist die erfindungsgemäße Membran durch die aufgebrachte Schicht vor den Bestandteilen des Rohgases geschützt. Die bekannte hohe chemische Stabilität von Graphen kann die Oberfläche der erfindungsgemäßen Membran dabei vor dem direkten Kontakt mit den Bestandteilen des Rohgases schützen, sodass keine oder eine verringerte korrosive Wirkung auf die Oberfläche der Membran auftritt. Es hat sich gezeigt, dass die Bestandteile des Rohgases außerdem keine korrosive Wirkung auf die Graphen-Schicht selbst haben. Zum anderen wurde erkannt, dass die für Wasserstoff durchlässige Schicht umfassend Graphen auf der Oberfläche der erfindungsgemäßen Membran den Durchtritt von Wasserstoff durch die Membran nicht oder nicht wesentlich hindert. Wasserstoff ist in der Lage durch die graphenhaltige Schicht hindurch zu treten. Die Beschreibung des Durchtritts von Wasserstoff durch Graphenschichten im Allgemeinen ist dem Fachmann seit kurzem bekannt (Wahab et al. (2023): Nature, Vol. 620, S. 782-786; DOI: https://doi.org/10.1038/s41586-023-06247-6).

In einer Ausführungsform ist die Schicht insbesondere eine aus Graphen aber nicht aus Graphit.

Es wurde erkannt, dass die für Wasserstoff durchlässige Schicht umfassend Graphen auf der Oberfläche der erfindungsgemäßen Membran hervorragend dazu geeignet ist, einerseits die Membran vor der korrosiven Wirkung der Bestandteile des Rohgases zu schützen und andererseits gleichzeitig den Durchtritt von Wasserstoff aus dem Rohgas durch die Membran nicht wesentlich beeinflusst. Eine derartige semipermeable Membran zeigt im Vergleich zu semipermeablen Membranen nach dem Stand der Technik keine, beziehungsweise keine so starke, Verringerung der Durchtrittsrate von Wasserstoff während der Nutzung. Außerdem wurde beobachtet, dass so die Nutzungsdauer der erfindungsgemäßen Membran im Vergleich zu einer Membran nach dem Stand der Technik sich erhöht.

Es hat sich als vorteilhaft für den Schutz vor Korrosion gezeigt, wenn die für Wasserstoff durchlässige Schicht der erfindungsgemäßen Membran einen hohen Gehalt an Graphen aufweist. In einer Ausführungsform besteht die für Wasserstoff durchlässige Schicht daher aus Graphen.

In einer Ausführungsform umfasst das erfindungsgemäße Verfahren zur Bearbeitung einer semipermeablen Membran den Schritt des Inkontaktbringens eines Gasgemisches umfassend ein kohlenstoffhaltiges Gas und Wasserstoff, mit einer Oberfläche der semipermeablen Membran zur Ausbildung einer für Wasserstoff durchlässigen Schicht die Graphen umfasst, insbesondere daraus besteht, wobei die Oberfläche der semipermeablen Membran bei dem Inkontaktbringen durch Anlegen einer Spannung bestromt wird und eine Temperatur zwischen 400°C und 1.100°C, bevorzugt zwischen 500°C und 1.000°C, aufweist. Es hat sich vorteilhafterweise gezeigt, dass sich die für Wasserstoff durchlässige Schicht direkt auf der semipermeablen Membran ausbildet. Vorteilhaft daran ist, dass die Schicht gleichmäßig auf der Oberfläche der Membran sich ausbildet. Es wird vermutet, dass dabei das Graphen, das von der Schicht umfasst wird oder aus dem die Schicht besteht, durch die Zersetzung des kohlenstoffhaltigen Gases entsteht. Der Wasserstoff könnte dabei als Reduktionsmittel dienen und das kohlenstoffhaltige Gas reduzieren. Es hat sich gezeigt, dass die Erwärmung der Membran auf eine Temperatur von 400 °C bis 1.100°C, wie 500°C und 1.000°C, vorteilhaft ist. Die Membran kann durch Anlegen einer Spannung bestromt und so auf diese Temperatur erwärmt werden. In einer Ausführungsform ist das kohlenstoffhaltige Gas Kohlenstoffdioxid. Es hat sich gezeigt, dass Kohlenstoffdioxid hervorragend für die Ausbildung der für Wasserstoff durchlässigen Schicht geeignet ist, da es sich bei der Ausbildung der Schicht komplett zersetzt und komplett zu Graphen reagiert.

In einer Ausführungsform umfasst das erfindungsgemäße Verfahren zur Bearbeitung einer semipermeablen Membran den Schritt des Auftragens einer Suspension umfassend Graphen, insbesondere Graphenflocken, und mindestens ein organisches Suspensionsmittel, wie Isopropanol und/oder Aceton, auf eine Oberfläche der semipermeablen Membran und Trocknen des mindestens einen organischen Suspensionsmittels zur Ausbildung einer für Wasserstoff durchlässigen Schicht die Graphen umfasst, insbesondere daraus besteht.

Es hat sich gezeigt, dass sich so die für Wasserstoff durchlässige Schicht gleichmäßig auf der Oberfläche der erfindungsgemäßen semipermeablen Membran ausbildet. Das Graphen kann dabei als Graphenflocken vorliegen. Ein anderes Wort für Graphenflocke ist Graphenschuppe. Als Graphenflocke oder Graphenschuppe ist ein einzelner, einlagiger Graphenkristall zu verstehen. Graphenflocken oder Graphenschuppen können einen Durchmesser von 10 µm bis 50 µm, wie 20 µm bis 40 µm aufweisen. Dem Fachmann ist die Herstellung von Graphen, wie die Herstellung von Graphenflocken oder Graphenschuppen, und die Herstellung einer Suspension umfassend Graphen, wie Graphenflocken oder Graphenschuppen, und mindestens ein geeignetes Suspensionsmittel, bekannt. In einer Ausführungsform ist das organische Suspensionsmittel Isopropanol oder Aceton. Dem Fachmann sind Isopropanol oder Aceton als Suspensionsmittel für Graphen, wie Graphenflocken oder Graphenschuppen, bekannt. Es hat sich gezeigt, dass sich Isopropanol oder Aceton sehr gut eignen, um Graphen zu suspendieren und diese Suspension sich sehr gut eignet, um auf die Oberfläche der semipermeablen Membran aufgetragen zu werden.

In einer Ausführungsform des erfindungsgemäßen Verfahrens zur Bearbeitung einer semipermeablen Membran umfasst das für Wasserstoff durchlässige Eisen Roheisen, bevorzugterweise ferritisches Eisen. In einer Ausführungsform umfasst das Eisen Reineisen. Es hat sich gezeigt, dass ein besonders hoher Eisenanteil vorteilhaft für die Durchtrittsrate des Wasserstoffs durch die Membran ist. Reineisen weist einen Eisenanteil von mehr als 99,8 % auf. Reineisen, sowie der Durchtritt von Wasserstoff durch eine Membran aus Reineisen, sind dem Fachmann bekannt. In einer Ausführungsform des erfindungsgemäßen Verfahrens zur Bearbeitung einer semipermeablen Membran besteht das für Wasserstoff durchlässige Eisen aus Roheisen, bevorzugterweise aus ferritischem Eisen. In einer Ausführungsform besteht das Metall aus Reineisen.

In einer Ausführungsform des erfindungsgemäßen Verfahrens zur Bearbeitung einer semipermeablen Membran bedeckt die für Wasserstoff durchlässige Schicht die gesamte Oberfläche der semipermeablen Membran, insbesondere die Oberfläche die in Kontakt mit dem Rohgas ist. Dies hat sich als vorteilhaft erwiesen, da die gesamte Oberfläche der Membran gegenüber der korrosiven Wirkung der Bestandteile des Rohgases geschützt ist.

In einer Ausführungsform des erfindungsgemäßen Verfahrens zur Bearbeitung einer semipermeablen Membran umfasst die für Wasserstoff durchlässige Schicht mindestens eine Lage Graphen, wie genau einer Lage, wie zwei, drei, vier, fünf usw. Lagen Graphen. Es ist auch möglich, dass die für Wasserstoff durchlässige Schicht mehrere Lagen, wie zwei, drei, vier, fünf usw. Lagen Graphen umfasst oder aus diesen besteht. Es hat sich gezeigt, dass dadurch die Oberfläche der Membran gegenüber der korrosiven Wirkung der Bestandteile des Rohgases geschützt ist, ohne den Durchtritt des Wasserstoffs durch diese Membran zu blockieren.

In einer Ausführungsform des erfindungsgemäßen Verfahrens zur Bearbeitung einer semipermeablen Membran überlappen sich die mindestens zwei oder mehr Lagen Graphen mindestens teilweise. Als überlappende Lage Graphen ist dabei eine erste Lage Graphen zu verstehen, die sich, zumindest teilweise, über oder unter einer zweiten Lage Graphen befindet. Es ist möglich, dass sich so auch mehr als zwei Lagen Graphen, wie drei Lagen Graphen oder vier Lagen Graphen, überlappen. Es ist auch möglich, dass sich die mindestens zwei Lagen Graphen ganz überlappen. Das bedeutet, dass sich einer erste Lage Graphen vollständig über oder unter einer zweiten Lage Graphen befindet. Es können sich auch mehr als zwei Lagen Graphen ganz überlappen. Die Graphenlagen liegen dabei derart vor, dass sie für Wasserstoff durchlässig sind.

In einer Ausführungsform ist die Oberfläche dabei vollständig vom Graphen bedeckt. Das heißt die Graphenschicht bzw. die Lage(n) von Graphen bilden eine geschlossene Schicht aus. Es liegen im wesentlichen keine Risse oder graphenfreie Abschnitte vor.

In einer Ausführungsform des erfindungsgemäßen Verfahrens zur Bearbeitung einer semipermeablen Membran weist die gemäß Schritt a) bereitgestellte semipermeable Membran eine strukturierte Oberfläche auf.

Dem Fachmann sind materialabtragende Verfahren zur Bearbeitung von Metallteilen, wie Membranen aus Metall, insbesondere Eisen oder eisenhaltigen Metalllegierungen, bekannt. Ein geeignetes materialabtragendes Verfahren zum Strukturieren der Oberfläche der Membran ist unter anderem das elektrolytische Ätzen mit Bestromung im Elektrolysebad. Das Funkenerodierverfahren ist eine weitere Methode, um oberflächliche Strukturen zu schaffen. In einem Bad mit einem nicht elektrisch leitfähigen, flüssigen Dielektrikum wird dabei eine Elektrode oberhalb der Oberfläche platziert und über eine CNC-Vorrichtung programmgemäß bewegt. Fräs-Verfahren, zum Beispiel CNC-Fräsen, oder Laser-Verfahren sind ebenfalls geeignet. Sandstrahlverfahren sind eine kostengünstige Möglichkeit für die Bearbeitung. Als Strahlmittel kommt neben Korund auch Quarzglas, aber auch Eisenpulver oder Eisengries infrage. Besonders geeignet sind jedoch Ätzverfahren. Ätzverfahren sind kostengünstig und einfach in großem Maßstab durchzuführen. Außerdem können leicht beide Oberflächen der Membran gleichzeitig in einem Arbeitsschritt bearbeitet werden. Als geeignete Verfahren kommen Funkenerodierverfahren, Fräsverfahren, Sandstrahlverfahren oder Ätzverfahren in Frage.

In einer Ausführungsform ist die Oberfläche der Membran mit einem Ätzverfahren strukturiert. Ätzverfahren zur Bearbeitung von Metallteilen sind dem Fachmann bekannt.

Dabei wird sich die korrosive Wirkung eines Ätzmittels auf das Metallteil zu Nutze gemacht und die Oberfläche des Metallteils strukturiert.

Es hat sich als vorteilhaft gezeigt, eine Membran mit einer strukturierten Oberfläche zur Beschichtung bereitzustellen, da sich bei einer derartigen Membran die Durchtrittsdicke für den Wasserstoff verringert und die Grenzfläche zwischen dem Rohgas und der Membran und/oder sich die Grenzfläche zwischen dem hochreinen Wasserstoff und der Membran vergrößert. Eine derartige Membran weist eine höhere Durchtrittsrate des Wasserstoffs durch die Membran auf als eine Membran mit einer glatten, nicht strukturierten Oberfläche. Es wurde erkannt, dass das erfindungsgemäße Verfahren zur Bearbeitung einer semipermeablen Membran hervorragend zum Ausbilden einer für Wasserstoff durchlässigen Schicht umfassend Graphen auf der strukturierten Oberfläche der Membran geeignet ist. Die strukturierte Oberfläche einer Membran erschwert nicht die Ausbildung der für Wasserstoff durchlässigen Schicht oder macht dieses unmöglich, im Gegenteil. Es hat sich dabei gezeigt, dass die strukturierte Oberfläche einer Membran auf der eine für Wasserstoff durchlässige Schicht umfassend Graphen oder aus Graphen bestehend ausgebildet ist, gegenüber der korrosiven Wirkung der Bestandteile des Rohgases geschützt ist. Gleichzeitig hat sich gezeigt, dass sich die Durchtrittsrate des Wasserstoffs durch die Membran bei längerer Nutzung nicht, beziehungsweise nicht so stark, verringert wie bei Membranen nach dem Stand der Technik.

In einem weiteren Aspekt umfasst die vorliegende Erfindung eine semipermeable Membran aus einem für Wasserstoff durchlässigen Eisen zur Gewinnung von hochreinem Wasserstoff aus einem Rohgas mit mindestens einer für Wasserstoff durchlässigen Schicht umfassend Graphen, erhältlich gemäß dem erfindungsgemäßen Verfahren zur Bearbeitung einer semipermeablen Membran. Es hat sich überraschenderweise gezeigt, dass die korrosive Wirkung der Bestandteile des Rohgases auf die Oberfläche der erfindungsgemäßen Membran im Vergleich zur korrosiven Wirkung der Bestandteile des Rohgases auf die Oberfläche von Membranen nach dem Stand der Technik nicht, beziehungsweise nicht so stark, ist. Die Durchtrittsrate des Wasserstoffs durch die erfindungsgemäße Membran verringert sich so während der Nutzung nicht, beziehungsweise nicht so stark, wie bei Membranen nach dem Stand der Technik. Es hat sich gezeigt, dass sich die Nutzungsdauer der erfindungsgemäßen Membran im Vergleich zu Membranen nach dem Stand der Technik erhöht. Ein hoher Eisengehalt hat sich dabei als vorteilhaft für die Durchtrittsrate des Wasserstoffs durch die erfindungsgemäße Membran erwiesen. Eine Membran aus Reineisen weist einen Eisengehalt von mehr als 99,8 % auf. Es hat sich als vorteilhaft erwiesen, wenn die für Wasserstoff durchlässige Schicht einen besonders hohen Gehalt an Graphen aufweist.

In einer Ausführungsform der erfindungsgemäßen semipermeablen Membran ist die semipermeable Membran als in Umfangsrichtung endloses Rohr ausgebildet.

In einem weiteren Aspekt umfasst die vorliegende Erfindung die Verwendung einer erfindungsgemäßen semipermeablen Membran oder einer Membran, erhältlich durch ein erfindungsgemäßes Verfahren. Es hat sich gezeigt, dass bei der Verwendung einer erfindungsgemäßen Membran es zu keiner, beziehungsweise zu keiner so starken, Korrosion der Oberfläche der Membran durch die Bestandteile des Rohgases kommt, wie bei der Verwendung von Membranen nach dem Stand der Technik beobachtet wurde. Auch die Durchtrittsrate des Wasserstoffs durch die erfindungsgemäße Membran verringert sich nicht, beziehungsweise nicht so stark, wie bei der Verwendung von Membranen nach dem Stand der Technik.

In einem Aspekt betrifft die vorliegende Erfindung ein Verfahren zur Gewinnung von hochreinem Wasserstoff aus einem Rohgas, wobei der Abtrennungsschritt durch Verwendung einer erfindungsgemäßen semipermeablen Membran oder einer semipermeablen Membran erhältlich durch das erfindungsgemäße Verfahren zur Bearbeitung einer semipermeablen Membran erfolgt. Es hat sich gezeigt, dass die erfindungsgemäße Membran bei der Verwendung in dem erfindungsgemäßen Verfahren mit dem Schritt Gewinnung von hochreinem Wasserstoff aus einem Rohgas nicht, beziehungsweise nicht so stark, durch die Bestandteile des Rohgases korrodiert wie gewöhnliche Membranen, die in Verfahren zur Gewinnung von hochreinem Wasserstoff aus einem Rohgas nach dem Stand der Technik verwendet werden. Es hat sich gezeigt, dass sich die Durchtrittsrate des Wasserstoffs über die Zeit durch die erfindungsgemäße Membran in dem erfindungsgemäßen Verfahren dadurch nicht, beziehungsweise nicht so stark verringert, wie bei gewöhnlichen Membranen die in Verfahren nach dem Stand der Technik verwendet werden.

In einem weiteren Aspekt umfasst die vorliegende Erfindung eine Vorrichtung zur Gewinnung von hochreinem Wasserstoff aus einem Rohgas mit einem Druckgefäß und Zu- und Ableitungen für das Rohgas bzw. dem Wasserstoff abgereicherten Rohgas, einem im Innenraum des Druckgefäßes angeordneten Innenbereich, der vollständig gegenüber dem Innenraum des Druckgefäßes abgeschlossen ist und dieser Innenbereich zumindest teilweise mit einer semipermeablen Membran zum Innenraum des Druckgefäßes abgegrenzt ist, wobei diese semipermeable Membran durchlässig ist für Wasserstoff, zur Abscheidung von hochreinem Wasserstoff aus dem Rohgas, dadurch gekennzeichnet, dass die semipermeable Membran eine erfindungsgemäße semipermeable Membran ist oder erhältlich durch ein erfindungsgemäßes Verfahren zur Bearbeitung einer semipermeablen Membran ist. Es hat sich vorteilhafterweise gezeigt, dass die Oberfläche der erfindungsgemäßen Membran oder der Membran erhältlich gemäß dem erfindungsgemäßen Verfahren zur Bearbeitung einer semipermeablen Membran, nicht, beziehungsweise nicht so stark, durch die Bestandteile des Rohgases korrodiert wie es bei gewöhnlichen Membranen in Vorrichtungen nach dem Stand der Technik beobachtet wurde. Dadurch weist die Membran der erfindungsgemäßen Vorrichtung eine Durchtrittsrate von Wasserstoff auf, die sich während der Nutzung im Vergleich zu einer Vorrichtung nach dem Stand der Technik mit einer gewöhnlichen Membran nicht, beziehungsweise nicht so stark, verringert und sich die Nutzungsdauer der erfindungsgemäßen Membran in der erfindungsgemäßen Vorrichtung erhöht.

In einer Ausführungsform der erfindungsgemäßen Vorrichtung herrscht in dem Innenraum des Druckgefäßes ein Überdruck und in dem Innenbereich des Druckgefäßes ein Unterdruck. Es hat sich vorteilhafterweise gezeigt, dass sich durch herrschen eines Überdrucks in dem Innenraum des Druckgefäßes die Durchtrittsrate des hochreinen Wasserstoffs durch die Membran erhöht. Dies könnte daran liegen, dass der hochreine Wasserstoff aus dem Rohgas durch den Überdruck durch die Membran hindurchgedrückt wird. Durch den Überdruck ist es möglich, dass sich die Stoffkonzentration des Wasserstoffs in dem Innenraum des Druckgefäß erhöht. Dadurch wird der Unterschied der Stoffkonzentrationen des Wasserstoffes zwischen dem Innenraum des Druckgefäßes und dem Innenbereich des Druckgefäßes erhöht. Es hat sich ebenfalls als vorteilhaft erwiesen, dass durch herrschen eines Unterdrucks in dem Innenbereich des Druckgefäßes sich die Durchtrittsrate des hochreinen Wasserstoffs durch die Membran ebenfalls erhöht. Dies könnte daran liegen, dass der hochreine Wasserstoff aus dem Rohgas durch den Unterdruck durch die Membran hindurchgezogen wird. Es ist möglich, dass durch den Unterdruck sich der Partialdruck des Wasserstoffs in dem Innenbereich des Druckgefäßes verringert. Dadurch könnte der Wasserstoff leichter aus der Membran heraustreten. Durch den Unterdruck ist es möglich, dass die Stoffkonzentration des Wasserstoffs in dem Innenbereich des Druckgefäß sich verringert. Durch den Unterdruck im Innenbereich des Druckgefäßes wird außerdem vermieden, dass hochreiner Wasserstoff aus dem Innenbereich des Druckgefäßes durch die Membran in den Innenraum des Druckgefäßes hindurchtritt. Es hat sich dabei als besonders vorteilhaft erwiesen, wenn gleichzeitig ein Überdruck in dem Innenraum des Druckgefäßes und ein Unterdruck in dem Innenbereich des Druckgefäßes herrscht. Durch den Überdruck in dem Innenraum des Druckgefäßes wird der Wasserstoff durch die Membran gedrückt. Gleichzeitig wird durch den Unterdruck in dem Innenbereich des Druckgefäßes der Wasserstoff durch die Membran gezogen. Dadurch erhöht sich die Durchtrittsrate des Wasserstoffes im Vergleich dazu, wenn nur ein Überdruck oder ein Unterdruck herrscht, stark.

In einer Ausführungsform der erfindungsgemäßen Vorrichtung, herrscht in dem Innenbereich des Druckgefäßes ein Vakuum. Das Vakuum kann ein im Wesentlichen absolutes Vakuum sein. Das Vakuum kann auch ein relatives Vakuum sein, wie ein Vakuum zwischen 65% und 95%, insbesondere ein Vakuum zwischen 70% und 95% oder ein Vakuum zwischen 80% und 95% sein. Ein relatives Vakuum von 65% entspricht dabei einem absoluten Restdruck von 350 mbar und ein relatives Vakuum von 95% entspricht dabei einem absoluten Restdruck von 50 mbar. Es wird vermutet, dass durch herrschen eines Vakuums in dem Innenbereich des Druckgefäßes der abgeschiedene Wasserstoff aus dem Innenbereich des Druckgefäßes abgeführt wird und sich das Konzentrationsgefälle des Wasserstoffs zwischen dem Innenraum des Druckgefäßes und dem Innenbereich des Druckgefäßes erhöht.

In einer Ausführungsform der erfindungsgemäßen Vorrichtung zur Gewinnung von hochreinem Wasserstoff ist die semipermeable Membran, zumindest zeitweise, durch Anlegung einer Spannung bestrombar ausgebildet und/oder die semipermeable Membran, zumindest zeitweise, beheizbar ausgebildet, insbesondere durch elektrische Energie beheizbar ausgebildet. Es wurde beobachtet, dass sich durch die zumindest zeitweise Bestromung und/oder Beheizung der erfindungsgemäßen Membran in der erfindungsgemäßen Vorrichtung, die Durchtrittsrate des Wasserstoffs durch die Membran im Vergleich zu einer erfindungsgemäßen Membran die nicht, auch nicht zeitweise, bestromt und/oder beheizt ist, erhöht. Es ist jedoch klar, dass die Bestromung und/oder Beheizung nicht zwingend für den Durchtritt des Wasserstoffs durch die Membran erforderlich ist. Der Wasserstoff tritt somit auch ohne die Bestromung und/oder die Beheizung durch die Membran hindurch. Die elektrische Spannung kann dabei eine Gleichspannung oder eine Wechselspannung sein. Die Membran kann einfach durch elektrische Energie beheizbar ausgebildet sein. Dem Fachmann sind weitere Methoden bekannt, die Membran beheizbar auszubilden.

In einer Ausführungsform der erfindungsgemäßen Vorrichtung zur Gewinnung von hochreinem Wasserstoff weist die semipermeable Membran eine strukturierte Oberfläche auf, die derart ausgebildet ist, dass sich die Durchtrittsdicke der semipermeablen Membran für den Wasserstoff verringert und sich die Grenzfläche zwischen dem Rohgas und der semipermeablen Membran und/oder die Grenzfläche zwischen dem hochreinen Wasserstoff und der semipermeablen Membran vergrößert. Dies hat sich als vorteilhaft erwiesen, da eine derartige Membran in der erfindungsgemäßen Vorrichtung aufgrund der strukturierten Oberfläche eine höhere Durchtrittsrate von Wasserstoff aufweist als Membranen mit einer glatten Oberfläche, und gleichzeitig die Bestandteile des Rohgases aufgrund der für Wasserstoff durchlässigen Schicht umfassend Graphen keine, beziehungsweise keine so starke, korrosive Wirkung auf die Oberfläche dieser Membran aufweisen wie gewöhnliche Membranen nach dem Stand der Technik.

In einer Ausführungsform des erfindungsgemäßen Verfahrens zur Gewinnung von hochreinem Wasserstoff aus Rohgas wird vor dem Einbringen des Rohgases dieses Rohgas von Feuchtigkeit, teerartigen, öligen oder fettigen Komponenten abgereichert.

Schließlich kann das erfindungsgemäße Verfahren derart durchgeführt werden, das der Innenraum der Vorrichtung mit der semipermeablen Membran mit Licht angestrahlt wird. Dieses liegt ist üblicherweise eines im Bereich von 300 nm bis 900 nm. Durch die Bestrahlung der Membran mit Licht ist eine weitere Steigerung des Umsatzes der Wasserstoffseparation möglich. Entsprechend kann eine erfindungsgemäße Vorrichtung eine Bestrahlungsquelle zum Bestrahlen der semipermeablen Membran aufweisen. Als Bestrahlungsquellen eignen sich übliche Quellen, die im genannten Bereich strahlen.

Bevorzugte Ausführungsformen der Erfindung werden nachfolgend anhand der Zeichnungen näher erläutert. Hierbei zeigen die Figuren folgendes:
Fig. 1 zeigt eine schematische Darstellung einer bereitgestellten semipermeablen Membran und einer gemäß dem erfindungsgemäßen Verfahren bearbeiteten semipermeablen Membran mit einer Graphen-Schicht. Die Graphen-Schicht bedeckt die gesamt Oberfläche der Membran.
Fig. 2 zeigt eine schematische Darstellung einer Anordnung zum Nachweis der Ausbildung einer für Wasserstoff durchlässigen Graphen-Schicht auf der Oberfläche einer semipermeablen Membran.
Fig.3 zeigt den Konzentrationsanstieg von Wasserstoff mit einer erfindungsgemäßen semipermeablen Membran und eine unbehandelte Membran gemäß dem Stand der Technik.

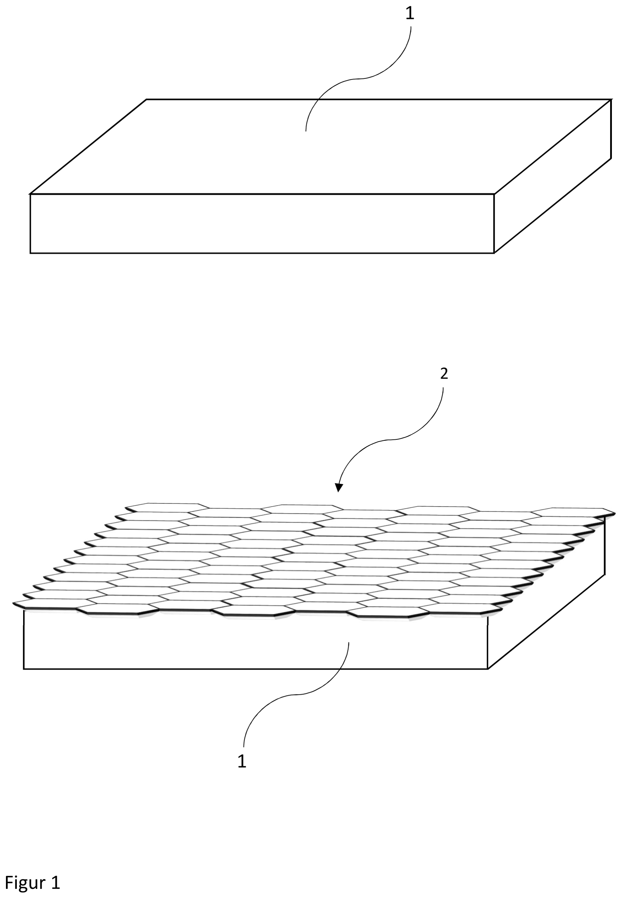

Die Fig. 1 oben zeigt eine schematische Darstellung eines Ausschnitts einer unbearbeiteten semipermeablen Membran 1. Weiterhin ist in der unteren Darstellung eine schematische Darstellung eines Ausschnitts einer gemäß dem erfindungsgemäßen Verfahren bearbeitete semipermeable Membran 1 mit einer für Wasserstoff durchlässigen Schicht 2 zu sehen. In der Darstellung ist die für Wasserstoff durchlässige Schicht eine Graphen-Schicht 2. Die Graphen-Schicht 2 ist einlagig ausgebildet und bedeckt die gesamte Oberfläche der semipermeablen Membran 1. Die Darstellung der Waben-förmigen Struktur der Graphen-Schicht 2 und das Größenverhältnis zwischen semipermeabler Membran 1 und Graphen-Schicht 2 ist zum Zwecke der Darstellung nicht maßstabsgetreu dargestellt. Üblicherweise liegt dabei die Graphen-Schicht 2 auf der dem Rohgas zugewandten Seite vor.

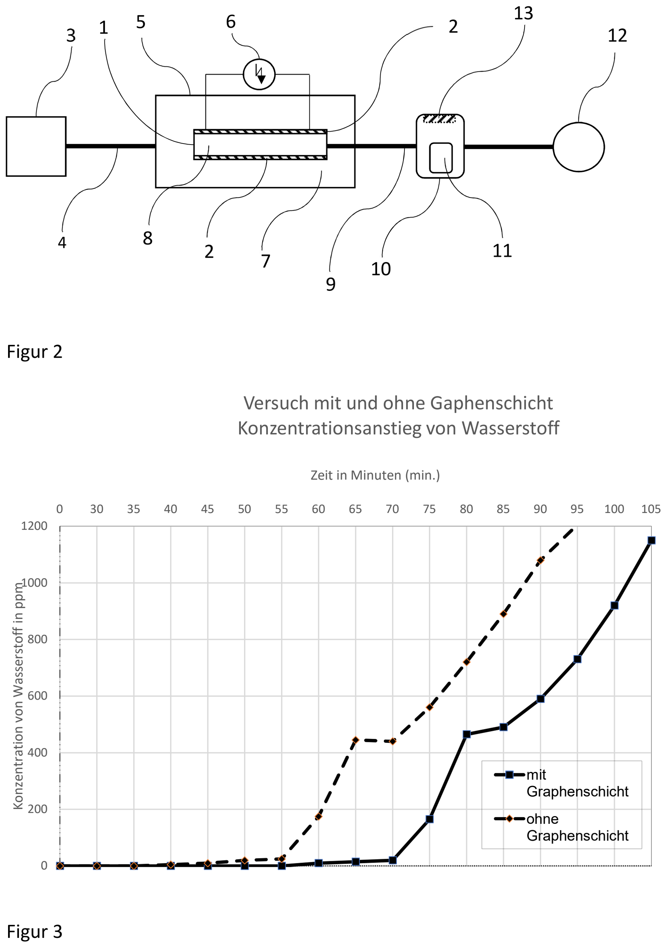

Die in der Fig. 2 schematisch dargestellte Versuchsanordnung umfasst ein Druckgefäß, das über eine Gasgemischzuleitung 4 mit dem Innenraum 7 verbunden ist. Der Innenraum 7 wird dabei durch eine Außenwand 5 begrenzt. In dem Innenraum 7 ist eine semipermeable Membran 1 angeordnet. Die semipermeable Membran 1 grenzt den Innenraum 7 von einem Innenbereich 8 ab. Die semipermeable Membran 1 ist mit einer Spannungsquelle 6 elektrisch leitend verbunden. Der Innenbereich 8 ist durch eine Wasserstoffableitung 9 mit einem Schauglasbehälter 10 und weiter mit einer Vakuumpumpe 12 verbunden. In dem Schauglasbehälter 10 befindet sich ein Messgerät 11 zur Messung der Wasserstoffkonzentration.

Zum Nachweis der Bildung einer für Wasserstoff durchlässigen Graphen Schicht 2 auf der Oberfläche der semipermeablen Membran 1 enthält das Druckgefäß 3 ein Gasgemisch aus 10 Vol.% Wasserstoff (H₂) und 90 Vol.% Kohlenstoffdioxid (CO₂). Das Gasgemisch wird durch die Gasgemischzuleitung 4 in den Innenraum 7 geleitet. Die Außenwand 5 ist in dieser Versuchsanordnung ein Quarzglasrohr. Die semipermeable Membran 1 ist in dieser Versuchsanordnung als Rohr ausgebildet und besteht aus Reineisen. Die semipermeable Membran 1 wird durch Anlegen einer Wechselspannung durch die Spannungsquelle 6 bestromt, z.B. mit max 16 V bei einem 16cm langen Eisenrohr mit einer max Stromstärke von 130 A. Durch die Bestromung wird die semipermeable Membran 1 bis zum Rotglühen erhitzt. Dies entspricht einer Temperatur von z.B. ca. 850 °C bei einem hellroten Glühen. Durch die Vakuumpumpe 12 wird der Innenbereich 8, die Wasserstoffableitung 9 und der Schauglasbehälter 10 mit einem relativen Vakuum von 70% beaufschlagt. Dies entspricht einem Restdruck von 0,3 bar.

Nach dem Start des Versuchs wurde beobachtet, dass sich auf der Oberfläche der semipermeablen Membran 1, die in dem Innenraum 7 in Kontakt mit dem o.g. Gasgemisch stand, eine hauchdünne und schwarzglänzende Schicht gebildet. Die Schicht haftete extrem an der Oberfläche und konnte nur mechanisch abgeschält werden. Auf der glühenden Oberfläche der semipermeablen Membran 1 wurde Kohlenstoffdioxid durch den Wasserstoff zunächst zu Kohlenstoffmonooxid und dann zu Graphen reduziert, wie aus der folgenden Reaktionsgleichung deutlich wird:

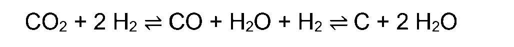

Das gebildete Graphen hat sich als mindestens einlagige Graphen-Schicht 2 auf der Oberfläche der semipermeablen Membran niedergeschlagen. Ein Teil des Wasserstoffs aus dem Gasgemisch ist zu Wasser oxidiert worden.

Weiterhin wurde im Laufe des Versuchs in dem Schauglasbehälter 10 die Bildung von Wasserdampfkondensat 13 beobachtet als Nachweis der Abtrennung des Wasserstoffs aus dem Gasgemisch. Das Messprinzip der verwendeten Messsonde basiert auf der Messung der Energie bei Umsetzung des Wasserstoffs mit Luftsauerstoff und zeigt dann die vorliegende Konzentration des Wasserstoffs.

Im Folgenden wird ein Vergleich der mit Graphen beschichteten Membran mit einer unbeschichteten Membran dargestellt.

Mit 4,2 bar Mischgasdruck wurde und eine Mischgaszusammensetzung von 20 Vol.% CO2 und 80 Vol.% Wasserstoff in den Innenraum eingeleitet. Durch einen Gaschromatographen wurde nach Beendigung des Versuches eine Reduzierung des H2-Anteils auf 78,5 Vol.% im Gasgemisch gemessen. Ein kleiner Teil des Kohlendioxids hat sich auf der Oberfläche des Eisenrohrs zersetzt und es hat sich eine glasige schwarze Schicht dort abgesetzt. Ein kleiner Wasserstoffanteil hat sich mit dem entstandenen Sauerstoff umgesetzt und an den erkalteten Stellen des Quarzglases als Wasserdampf abgesetzt. Der durch die Eisenmembran durchgetretene reine Wasserstoff hat sich mit einem Teil des Luftsauerstoffs im Plexi-Schauglas mit dem H2-Detektor verbunden und als Wasserdampfkondensat an der Wandung abgeschieden. Der Wasserstoffdetektor der Firma Dräger arbeitet mit einem Platinelement auf dessen Oberfläche Wasserstoff bei Raumtemperatur mit dem Luftsauerstoff reagieren kann. Der Messwert in Form von entstandener Energie zeigt die momentane Konzentration von H2 an. Der Luftanteil im Vakuum-Schauglas wird durch eine gezielte Undichtigkeit in das Gefäß geleitet. Das Messgerät zeigt die momentane Konzentration von Wasserstoff an. Zu Beginn der Separation erfolgte eine Bestromung der Membran. Tabelle 1 zeigt den zeitlichen Verlauf der Wasserstoffseparation.

Wasserstoffseparation ohne Graphenbeschichtung:
Bei einem vergleichbaren Mischgasdruck von 4,1 bar wurde ein Gemisch aus 50 Vol.% Stickstoff und 50 Vol.% Wasserstoff in einen entsprechenden Innenraum geleitet und unter anfänglicher Bestromung Wasserstoff separiert. Die Daten sind in der Tabelle 1 dargestellt.

Figur 3 zeigt den Anstieg der Konzentration an Wasserstoff über die Zeit der erfindungsgemäßen Membran und einer gemäß dem Stand der Technik. Es findet ein vergleichbarer Durchsatz des Wasserstoffs statt, wobei der Beginn der Separation zeitverzögert ist.

**Tabelle 1:**

| **Visualisierung der Wasserstoffseparation mit und ohne Graphenschicht** | | | | |
|---|---|---|---|---|
| **Zeit in Minuten (min.)** | **mit Graphenschicht** | | **ohne Graphenschicht** | |
| | **Konzentrationsanstieg von Wasserstoff in ppm** | **Strom** | **Konzentrationsanstieg von Wasserstoff in ppm** | **Strom** |
| 0 | 0 | an | 0 | an |
| 30 | 0 | an | 0 | an |
| 35 | 0 | an | 0 | an |
| 40 | 0 | an | 5 | an |
| 45 | 0 | an | 10 | an |
| 50 | 0 | an | 20 | an |
| 55 | 0 | an | 25 | an |
| 60 | 10 | an | 175 | an |
| 65 | 15 | an | 445 | aus |
| 70 | 20 | an | 440 | aus |
| 75 | 165 | an | 560 | aus |
| 80 | 465 | aus | 720 | aus |
| 85 | 490 | aus | 890 | aus |
| 90 | 590 | aus | 1080 | aus |
| 95 | 730 | aus | 1205 | aus |
| 100 | 920 | aus | 1550 | aus |
| 105 | 1150 | aus | >2000 | aus |
| 110 | 1350 | aus | >2000 | aus |

| | | | | |
|---|---|---|---|---|
| Weitere Ausführungsbeispiele zur Beschichtung | | | | |

In einem weiteren Ausführungsbeispiel wird auf eine bereitgestellte semipermeable Membran aus Reineisen mit einer glatten, unstrukturierten Oberfläche eine Suspension aus Graphenschuppen, Aceton und Isopropanol aufgetragen., z.B. Graphen Nanoplatelet von GMG Graphene Manufakturing group. Die Graphenschuppen weisen dabei eine Größe von 20 µm bis 40 µm auf. Anschließend wird die beschichtete Membran getrocknet. Die auf der Oberfläche der Membran ausgebildete für Wasserstoff durchlässige Schicht besteht aus Graphen. Das Graphen liegt in zwei bis drei Lagen teilweise überlappend vor.

In einem weiterem Ausführungsbeispiel wird eine semipermeable Membran aus Reineisen bereitgestellt, wobei die Membran eine durch ein Ätzverfahren strukturierte Oberfläche aufweist. Die Membran wird durch Anlegen einer Wechselstromspannung wie oben beschrieben bis zum Rotglühen erhitzt. Anschließend wird die Oberfläche der rotglühenden Membran in Kontakt mit einem Gasgemisch aus 90 Vol.% Kohlenstoffdioxid und 10 Vol.% Wasserstoff gebracht. Es setzt sich eine dünne, schwarz glänzende und komplett geschlossene Schicht aus einer Lage Graphen auf der Oberfläche der Membran ab.

### Bezugszeichenliste:

- 1: semipermeable Membran
- 2: Graphen-Schicht
- 3: Druckgefäß
- 4: Gasgemischzuleitung
- 5: Außenwand
- 6: Spannungsquelle
- 7: Innenraum
- 8: Innenbereich
- 9: Wasserstoffableitung
- 10: Schauglasbehälter
- 11: Messgerät
- 12: Vakuumpumpe
- 13: Wasserdampfkondensat

## Patentansprüche

1. Verfahren zur Bearbeitung einer semipermeablen Membran aus einem für Wasserstoff durchlässigen Eisen oder aus einer für Wasserstoff durchlässigen eisenhaltigen Metalllegierung, geeignet zur Gewinnung von hochreinem Wasserstoff aus einem Rohgas, umfassend die Schritte:
a. Bereitstellen einer semipermeablen Membran aus einem für Wasserstoff durchlässigen Eisen oder aus einer für Wasserstoff durchlässigen eisenhaltigen Metalllegierung;
b. Ausbilden einer für Wasserstoff durchlässigen Schicht umfassend Graphen auf mindestens einer Oberfläche der semipermeablen Membran.

2. Verfahren nach Anspruch 1, wobei die im Schritt b.) ausgebildete Schicht aus Graphen besteht.

3. Verfahren nach Anspruch 1 oder 2, **gekennzeichnet durch** Inkontaktbringen eines Gasgemisches, umfassend ein kohlenstoffhaltiges Gas, insbesondere Kohlenstoffdioxid, und Wasserstoff, mit mindestens einer Oberfläche der semipermeablen Membran zur Ausbildung einer für Wasserstoff durchlässigen Schicht die Graphen umfasst, insbesondere daraus besteht, wobei die semipermeable Membran durch Anlegen einer Spannung bestromt wird und die Oberfläche der semipermeablen Membran bei dem Inkontaktbringen eine Temperatur zwischen 400°C und 1.100°C, bevorzugt zwischen 500°C und 1.000°C, aufweist.

4. Verfahren nach Anspruch 1 oder 2, **gekennzeichnet durch** Auftragen einer Suspension umfassend Graphen, insbesondere Graphenflocken, und mindestens ein organisches Suspensionsmittel, wie Isopropanol und/oder Aceton, auf eine Oberfläche der semipermeablen Membran und Trocknen des mindestens einen organischen Suspensionsmittels zur Ausbildung einer für Wasserstoff durchlässigen Schicht die Graphen umfasst, insbesondere daraus besteht.

5. Verfahren nach einem der vorhergehenden Ansprüche, **dadurch gekennzeichnet, dass** das für Wasserstoff durchlässige Eisen Roheisen, bevorzugt ferritisches Eisen, bevorzugter Reineisen umfasst, insbesondere daraus besteht.

6. Verfahren nach einem der vorhergehenden Ansprüche, **dadurch gekennzeichnet, dass** die für Wasserstoff durchlässige Schicht die mindestens eine beschichtete Oberfläche der semipermeablen Membran vollständig bedeckt, insbesondere die Oberfläche die in Kontakt mit einem Rohgas ist.

7. Verfahren nach einem der vorhergehenden Ansprüche, **dadurch gekennzeichnet, dass** die für Wasserstoff durchlässige Schicht mindestens eine Lage Graphen umfasst, wie mehrere Lagen Graphen umfasst, insbesondere daraus besteht, bevorzugt, **dadurch gekennzeichnet, dass** sich die mindestens zwei oder mehr Lagen Graphen mindestens teilweise überlappen, wie ganz überlappen.

8. Verfahren nach einem der vorhergehenden Ansprüche, wobei die gemäß Schritt a) bereitgestellte semipermeable Membran eine strukturierte Oberfläche aufweist.

9. Semipermeable Membran aus einem für Wasserstoff durchlässigen Eisen, insbesondere aus Reineisen, oder eisenhaltiger Metalllegierung zur Gewinnung von hochreinem Wasserstoff aus einem Rohgas mit mindestens einer für Wasserstoff durchlässigen Schicht umfassend Graphen, insbesondere bestehend aus Graphen, erhältlich gemäß einem Verfahren nach einem der Ansprüche 1 bis 8, bevorzugt, **dadurch gekennzeichnet, dass** die semipermeable Membran als in Umfangsrichtung endloses Rohr ausgebildet ist.

10. Verwendung einer semipermeablen Membran nach Anspruch 9 oder erhältlich durch ein Verfahren nach einem der Ansprüche 1 bis 8 zur Gewinnung von hochreinem Wasserstoff durch Abscheidung von Wasserstoff aus einem Rohgas.

11. Verfahren zur Gewinnung von hochreinem Wasserstoff aus einem Rohgas, umfassend den Schritt der Abscheidung von Wasserstoff aus einem Rohgas unter Verwendung einer semipermeablen Membran nach Anspruch 9 oder einer semipermeablen Membran erhältlich durch ein Verfahren nach einem der Ansprüche 1 bis 8.

12. Vorrichtung zur Gewinnung von hochreinem Wasserstoff aus einem Rohgas mit einem Druckgefäß und Zu- und Ableitungen für das Rohgas bzw. dem Wasserstoff abgereicherten Rohgas, einem im Innenraum des Druckgefäßes angeordneten Innenbereich, der vollständig gegenüber dem Innenraum des Druckgefäßes abgeschlossen ist und dieser Innenbereich zumindest teilweise mit einer semipermeablen Membran zum Innenraum des Druckgefäßes abgegrenzt ist, wobei diese semipermeable Membran durchlässig ist für Wasserstoff, zur Abscheidung von hochreinem Wasserstoff aus dem Rohgas, **dadurch gekennzeichnet, dass** die semipermeable Membran eine ist nach Anspruch 9 oder erhältlich durch ein Verfahren nach einem der Ansprüche 1 bis 8.

13. Vorrichtung zur Gewinnung von hochreinem Wasserstoff nach Anspruch 12, **dadurch gekennzeichnet, dass** in dem Innenraum des Druckgefäßes ein Überdruck herrscht und dass in dem Innenbereich des Druckgefäßes ein Unterdruck, insbesondere ein Vakuum, herrscht.

14. Vorrichtung zur Gewinnung von hochreinem Wasserstoff nach einem der Ansprüche 12 oder 13, **dadurch gekennzeichnet, dass** die semipermeable Membran zumindest zeitweise durch Anlegung einer Spannung bestrombar ausgebildet ist und/oder die semipermeable Membran zumindest zeitweise beheizbar ausgebildet ist, insbesondere durch elektrische Energie beheizbar ausgebildet ist.

15. Vorrichtung zur Gewinnung von hochreinem Wasserstoff nach einem der Ansprüche 12 bis 14, **dadurch gekennzeichnet, dass** die semipermeable Membran eine strukturierte Oberfläche aufweist die derart ausgebildet ist, dass sich die Durchtrittsdicke der semipermeablen Membran für den Wasserstoff verringert und sich die Grenzfläche zwischen dem Rohgas und der semipermeablen Membran und/oder die Grenzfläche zwischen dem hochreinen Wasserstoff und der semipermeablen Membran vergrößert.
